(19)

Europäisches
Patentamt
European
Patent Office
Office européen
des brevets

(11)  **EP 1 998 119 B1**

(12)  **EUROPEAN PATENT SPECIFICATION**

(45) Date of publication and mention
of the grant of the patent:
**03.04.2013  Bulletin 2013/14**

(51) Int Cl.:
**F24F 13/02** *(2006.01)*     **F24F 13/24** *(2006.01)*

(21) Application number: **08156449.4**

(22) Date of filing: **19.05.2008**

(54) **Silencer for ventilation ducts**

Dämpfer für Belüftungskanäle

Silencieux pour conduites de ventilation

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **31.05.2007  SE 0701336**

(43) Date of publication of application:
**03.12.2008  Bulletin 2008/49**

(73) Proprietor: **Swegon AB**
**671 29 Arvika (SE)**

(72) Inventor: **Jonasson, Torbjörn**
**671 51 Arvika (SE)**

(74) Representative: **Börlin, Maria et al**
**Zacco Sweden AB**
**P.O. Box 5581**
**114 85 Stockholm (SE)**

(56) References cited:
**EP-A- 0 435 588        EP-A- 1 580 494
DE-C1- 4 445 794      FR-A- 2 697 613
JP-A- 2002 266 756    SE-A- 8 505 350
US-A- 3 175 640        US-A- 4 667 770
US-A- 5 911 457        US-B1- 6 253 873**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a silencer for ventilation ducts, comprising an outer casing, a continuous, inner tube of air-permeable material situated inside the casing and a sound-damping material in the space between the inner tube and the outer casing, together with a method of manufacturing said silencer.

### BACKGROUND ART

In known silencers of the aforementioned type the inner tube consists of a perforated sheet metal tube or surface layer adhesively bonded onto an absorbent material cut to shape, for example mineral wool having a high density ($> 70 \, kg/m^2$). Perforation of the tube means that sound waves can get out into the fibrous material, usually mineral wool or glass wool, which surrounds the perforated tube, where they are damped. In order to achieve good sound damping, the open area of the wall of the sheet metal tube should be relatively large, which means that there is a risk of fibres or fibre ends from the fibrous material getting into the sheet metal tube and being entrained with the ventilation air. In order to eliminate this risk, the silencer is provided with a thin, air-permeable woven fabric between the inner tube and the fibrous material, the woven fabric preventing loose fibres or fibre ends from the fibrous material getting into the sheet metal tube.

The object of the present invention is to provide a silencer of the type described above, which has fewer components than known silencers for ventilation ducts. A further object of the invention is to provide a silencer for ventilation ducts which affords an improved sound-damping effect.

US6,253,873B1 discloses a silencer according to the preamble of claim 1.

### DISCLOSURE OF INVENTION

According to the invention this object is achieved by means of a silencer for ventilation ducts according to claim 1. The air-permeable woven fabric of cloth or fibrous material allows the air to pass through to the external sound-damping material and at the same time prevents loose parts of the sound-damping material from being carried into the inner tube. The sheet metal tubes and protective woven fabrics of known silencers for ventilation ducts can therefore be replaced by a single component. This affords a simplified silencer construction, which reduces manufacturing costs.

In a preferred embodiment, the tube wall preferably has an air-permeability of 5 1/second x $m^2$ x Pa. The tube may be constructed from non-woven polyester material having a weight per unit area of 50 - 80 $g/m^2$. The tube is preferably constructed from a helically wound strip of fibrous material with overlapping edges, the edges overlapping one another and being joined together, or built up from multiple layers of strips, the various layers being joined together.

A connecting piece for coupling the silencer to a pipe of larger diameter than the inner tube of the silencer and forming part of a ventilation duct is arranged at either end of the silencer, each connecting piece comprising an inner cylindrical section, which fits the inner tube of the silencer, and an outer nozzle-shaped section of a diameter increasing successively outwards.

The invention also relates to a method of manufacturing a silencer according to claim 7.

### BRIEF DESCRIPTION OF DRAWINGS

A preferred embodiment of the invention will now be described with reference to drawings attached, of which

Fig. 1 schematically shows a partially sectional side view of a silencer for ventilation ducts according to a preferred embodiment of the invention,

Fig. 2 schematically shows a partially sectional detailed view of a part of the inner tube of the silencer in Fig. 1, viewed from the inside of the tube,

Fig. 3 schematically shows a detailed view of the connection between the silencer in Fig. 1 and a connecting tube of a ventilation duct, and

Fig. 4 schematically shows an arrangement for manufacturing an inner tube for a silencer according to a first preferred embodiment of the invention.

### MODE(S) FOR CARRYING OUT THE INVENTION

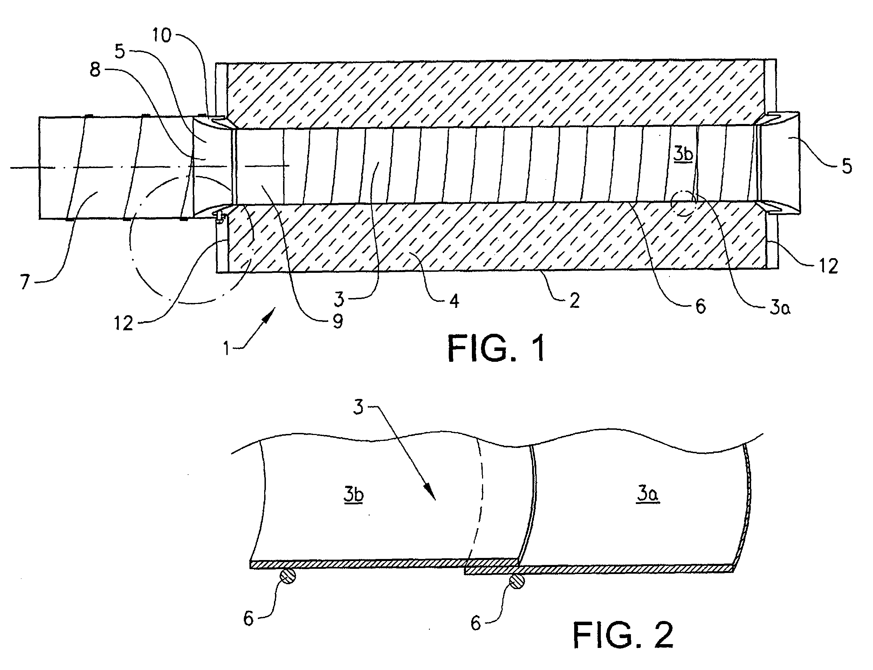

The silencer 1 shown in Fig. 1 basically comprises three components, an outer sheet metal tube 2, an inner tube 3 coaxial with the outer tube, and a sound-damping material 4, which fills the space between the tubes 2 and 3. Connecting pieces 5, which have outer parts extending outside the silencer 1 for coupling to ventilation pipes in the ventilation system of which the silencer forms part, are inserted into the opposite ends of the silencer 1.

The inner tube 3 is composed of a woven fabric or non-woven fibrous material, such as a non-woven polyester material, for example. Other types of fibrous materials, of other plastic materials, for example, are suitable, and staple fibre woven fabrics may also be used. The fibrous material may be similar to a textile or may consist of a non-woven fibrous material, a so-called non-woven. An imprinted non-woven material having a weight per unit area of 50 - 80 $g/m^2$ has proved to be suitable. The air-permeability of the fibrous material is suitably greater than 5 1/second per $m^2$ and Pa over the fibrous material. The air permeability above is defined by the formula,

$$Q = Cxdp$$

where Q is the air flow through the fibrous material in 1/second per m$^2$,
C is a constant typically between 4.5 and 5.5 and dp is the pressure drop over the fibrous material in Pa.

In the embodiment shown a metal wire 6 has been helically wound around the outside of the inner tube 3 and fastened thereto in order to increase the rigidity and strength. The metal wire may take the form of a commercially available welding filler wire with a diameter of 1.2 mm, for example.

It is naturally possible to use other types of metal wires having similar stiffness and strength characteristics and varying diameters. The lead of the helically wound wire 6 is such that the distance between the turns of the helically wound wire is suitably between 5 and 25 mm, preferably between 10 and 20 mm, and more preferably 15 mm. The presence of the metal wire means that the inner tube 3 can be made with a lower rigidity and strength, which increases the number of fibrous materials that it is possible to use for the inner tube 3.

The sound-damping material may consist of mineral wool or glass wool, but all known sound-damping materials may be used in the silencer according to the invention.

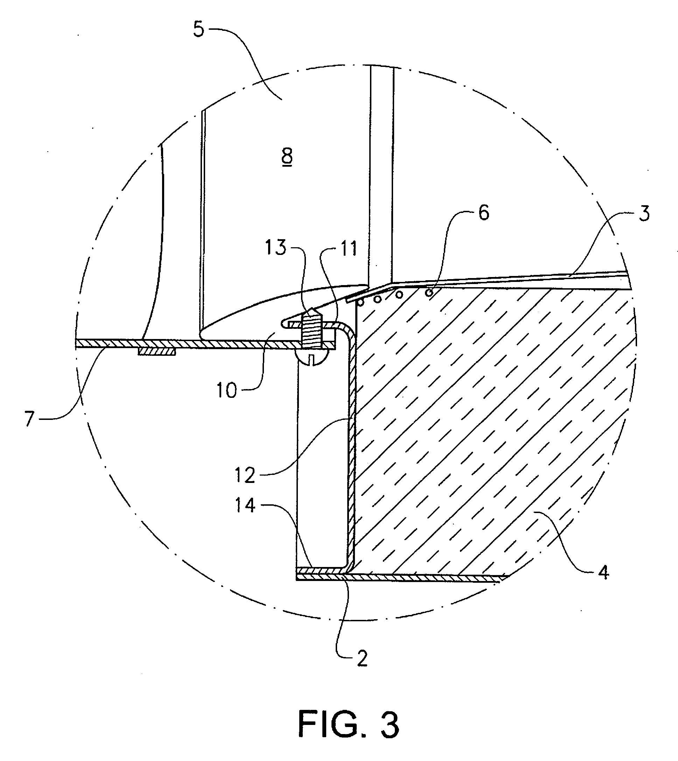

In the embodiment shown in Fig. 1 the inner tube 3 has a smaller diameter than the pipes forming part of the ventilation system, of which a section of such piping 7, a so-called SPIRO pipe, is shown in the left-hand part of Fig. 1 connected to the left-hand connecting piece 5. Being able to use an inner tube of smaller diameter increases the sound-damping. In order to afford the air flow a smooth transition between connecting pipe 7 and the inner tube 3, the connecting piece 5 is designed with a nozzle-shaped inner adapter 8. The outer end of the adapter 8 has an outside diameter corresponding to the inside diameter of the pipe 7 connecting to the silencer and an inner end having an outside diameter corresponding to the inside diameter of the inner tube 3 of the silencer. The connecting piece 5 also has an inner cylindrical part 9 having an outside diameter corresponding to the inside diameter of the inner tube 3 of the silencer. A flange 10 directed towards the inner tube 3 furthermore extends from the outer ends of the adapter 8, as is best seen from Fig. 3, which on larger scale shows a part of the silencer 1 and connecting pipe 7 corresponding to the dashed circle in the left-hand part of Fig. 1. The flange 10 extends over a centrally outwards facing flange 11 of an end plate 12, which closes the left-hand end of the silencer 1. The end of the pipe 7 connected to the silencer extends over the flange 10 of the connecting piece 5 and one or more screws 13 extend through the pipe 7, the flange 10 of the connecting piece 5 and the flange 11 of the end plate 12, thereby connecting the silencer 1, the connecting piece 5 and the pipe 7 joined to the silencer to one another.

The inner wall of the adapter 8 is preferably continuously curved and in the transition between the adapter 8 and the inner cylindrical part 9 the tangent to the wall is parallel to the inner wall of the cylindrical part 9. The connecting piece 5 is preferably made of a plastic, such as polypropylene, polythene or polyamide, although other thermoplastic polymers and mouldable or diecast materials, such as aluminium and zinc, may be used. Packings or seals, not shown in the drawings, are preferably arranged between the outer end section of the connecting piece 5 and the pipe 7 joined to the silencer, and between the inner part 9 and the inner tube 3.

Although the adapter 8 is preferably continuously curved, it may also consist of a straight line, in which case it preferably terminates in cylindrical parts at its ends.

The left-hand and right-hand connecting pieces 5 shown in Fig. 1 are identical and the right-hand end of the silencer 1 in Fig. 1 is also closed by means of an end plate 12 similar to the end plate at the left-hand end of the silencer 1. As can be seen from the drawing, the outer sheet metal tube 2 extends beyond the sound-damping material 4 at both ends of the silencer and in these areas is suitably connected to an outer, outward-projecting flange 14 of each end plate 12, for example by welding, adhesive bonding, lapping or upsetting.

Fig. 2 to a larger scale schematically shows a partially sectional view of a part of the inner tube 3 inside the area marked by a dashed circle in the right-hand part of Fig. 1. The tube 3 shown in the embodiment according to Fig. 1 is constructed from a helically wound strip of fibrous material with overlapping edges, the edges overlapping one another and being joined together by an adhesive pattern. Fig. 2 shows two overlapping parts 3a, 3b of the helically wound strip of fibrous material, from which the tube 3 is constructed.

An inner tube 3 of fibrous material can be produced by helically winding a strip of fibrous material around a tube, so that adjacent edges of the helically wound strip overlap one another, the overlapping edges being adhesively bonded together during the helical winding process.

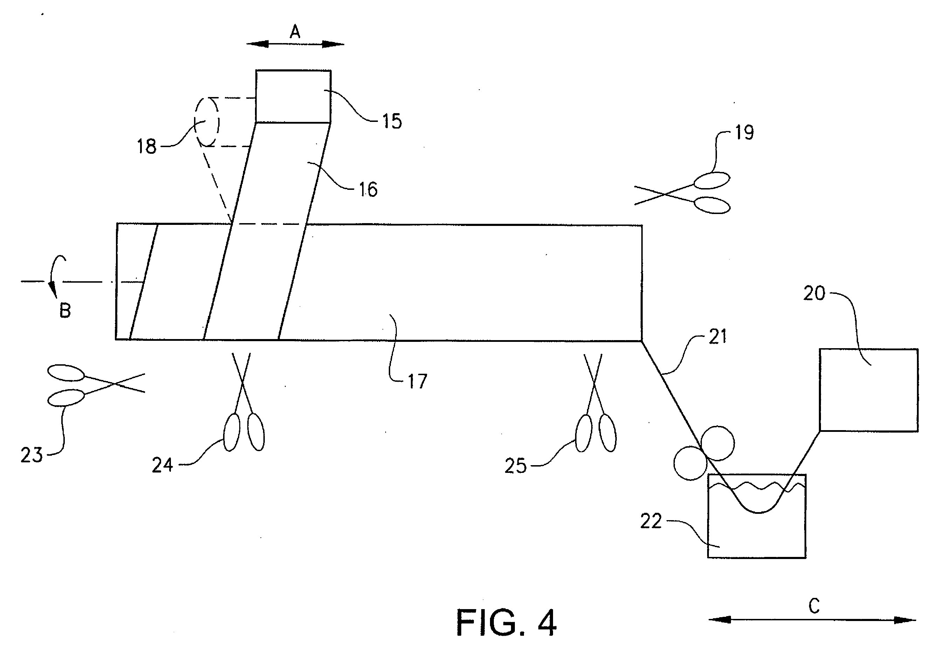

Fig. 4 schematically shows an arrangement for manufacturing such an inner tube.

The arrangement comprises a rotatable storage reel 15, on which a strip 16 of fibrous material is wound. This reel can suitably be traversed to and fro in the direction of the arrow A, for example by connecting the holder for the reel 15 to a rack-and-pinion mechanism or to an endless belt or the like. The direction of movement of the reel 15 is parallel to the axial direction of a tube 17 of a diameter corresponding to the desired inside diameter of the inner tube that is to be produced by means of the arrangement in Fig. 4. The tube 17 is rotatable in the direction indicated by the arrow B in Fig. 4. In order to produce an inner tube for a silencer according to the invention, the end of the strip 16 of fibrous material wound onto the reel 15 is fixed to one end of the tube 17 (the left-hand end in Fig. 4), following which the tube 17 is set in rotation whilst the reel 15 is traversed in the direction A towards the right-hand end of the tube 17 in Fig. 4. The strip 16 of fibrous material is thereby wound off from the reel 15 and is helically wound onto the tube 17. In Fig. 4 the strip of fibrous material has been helically wound in two turns onto the tube 17. The lead of the helically wound strip 16 of fibrous material can be controlled through suitable selection of the ratio between the rotational speed of the tube 17 and the rate of traverse of the reel 15 and can be adjusted so that the edges of the helically wound strip of fibrous material overlap one another. A spray nozzle 18 for adhesive is fixed to the holder for the reel 15 and is designed to spray a pattern of adhesive spots along an edge area corresponding to the edge overlap of the strip 16 of fibrous material. The overlapping edges of the strip of fibrous material wound onto the tube 17 are therefore joined together by a pattern of adhesive spots. At the right-hand end of the tube is a cutting or shearing tool 19, which separates the part of the strip of fibrous material wound onto the tube 17 from the reel 15 when this has reached its right-hand limit position in the figure. The reel 15 and the nozzle 18 are then returned to the starting position.

The arrangement also comprises a storage reel 20 for metal wire 21 and an adhesive trough 22, through which this wire runs, as is shown schematically in Fig. 4. The reel 20 and the trough 22 are traversable in the direction C parallel to the tube 17, in the same way as the reel 15 and the adhesive nozzle 18. Once the strip of fibrous material has been separated from the reel 15 when the latter has reached its right-hand limit position shown in the figure, the end of the wire 21 is fixed to the right-hand end of the strip 16 of fibrous material helically wound onto the tube 17. The tube 17 is then rotated in the same or the opposite direction to the direction indicated by the arrow B in Fig. 4 and the wire reel 20 and the trough 22 are at the same time traversed in the direction C towards the left in Fig. 4. The wire 21 will thereby be helically wound on top of the wound strip 16 and affixed to the latter by virtue of its adhesive coating. The ratio between the speed of rotation of the tube 17 and the wire reel 20 is suitably selected so that the distance between the turns of the helically wound wire 21 is between 5 and 25 mm, preferably between 10 and 20 mm and more preferably 15 mm. When the wire reel reaches the left-hand end of the tube 17, the wire 21 is separated from the reel 20 by means of a cutting or shearing tool 23 and the reel is then returned to its starting position.

The cut is accordingly made at right angles to the tube 17 by means of a cutting or shearing tool 24 and 25 situated a short distance in from each end of the tube 17. The tool 24 at the left-hand end of the tube 17 must thereby be situated so that the part of the strip 16, which includes the end fixed to the tube 17, is separated from the rest of the tube, whilst the tool 25 at the right-hand end of the tube 17 must be situated so that the cut surface of the separated part of the strip 16 extends around the entire circumference of the tube 17. After separation of the outer parts of the strip 16 wound onto the tube, these outer parts are removed from the tube 17. The finished tube, which is formed by the helically wound strip 16, is then suitably removed from the tube 17, for example by means of a ring or the like, which is applied to one end of the tube 17 and then brought towards the other end of the tube 17, so that the finished silencer inner tube formed by the wound strip 16 is pushed off the tube 17.

The arrangement is then ready to produce another silencer inner tube of fibrous material according to the invention.

In the embodiment shown, the silencer inner tube 3 has ends in the form of a truncated cone, with base surface facing outwards in order to facilitate fitting of the tapering part of the connection piece 5. Given such a design shape, the tube 17 is preferably designed so that it can be given a smaller diameter after manufacturing of the silencer inner tube, so that this can easily be drawn off the tube 17. Such a reduction in the diameter may be achieved, for example, in that the tube 17 is inflatable or comprises multiple parts, which can be kept in an expanded or collapsed state by some suitable mechanism.

The arrangement for manufacturing silencer inner tubes of fibrous material may naturally be modified in a number of different ways. For example, the storage reel with the wound strip of fibrous material and the wire reel may be stationary and the rotatable tube may also be traversable in the axial direction. Such an embodiment is advantageous if the tube length is such that multiple silencer inner tubes of fibrous material can be manufactured at a time, in that the same cutting or sheering tool can be used for separating the various inner tubes from one another and for parting the final end of the last formed silencer inner tube of fibrous material. With such an embodiment there is also a reduction in the material wastage per manufactured tube.

It is also possible with the arrangement according to Fig. 4 to wind the strip 16 in more than one layer by allowing the reel 15 to move to and fro without the strip being cut off. The strip will then be helically wound with the opposite helical direction in different layers. In such a method of operation, overlapping edges of the first layer of the strip may be left without joining them together and an adhesive pattern can instead be applied to the outside of each layer of helically wound strip.

It is naturally also possible to apply a rectangular piece of fibrous material around a tube and to fasten overlapping parts of this piece together, so that a silencer inner tube according to the invention is formed, following which a metal wire is helically wound around the formed tube of fibrous material. With such an application, a tube of fibrous material may be formed with one or more layers.

It is also feasible to construct a silencer inner tube according to the invention from strips of fibrous material of different structures, which can render the sound damping effective over a larger frequency range. In such an application the rotatable tube, around which the strips are wound, is preferably traversable in its axial direction, so that strips of different structures can be added to previously wound strips as the rotatable tube arrives at the various stationary reels for strips of different structures. Silencer inner tubes of fibrous material of different structures can naturally also be formed by means of rectangular pieces of fibrous material.

The final assembly of the constituent components of the silencer 1 may be undertaken by winding the sound-damping material 4 around the inner tube 3, following which the unit comprising the material 4 and the tube 3 is inserted into the outer sheet metal tube 2, in which an end plate 12 is fixed. The silencer is then closed by fitting the second end plate. Finally the connecting pieces 5 are fitted.

The embodiments of the invention described may be modified without departing from the scope of the invention. For example, the connecting pieces may be adhesively bonded instead of screw fastened as in the embodiment shown in Fig. 1. Other sound-damping materials and types of fibres other than those specified above may be used for the inner tube. The silencer and the constituent components may have a cross section other than a circular cross section, for example a rectangular or oval cross section. Nor need the silencer inner tube have a smaller diameter than the ventilation ducts to which it is connected, although this is preferred. It is also feasible to fasten the various turns of the strips of fibrous material together by stitched seams or welded seams. The final assembly of the components of the silencer may also be done in another order, for example the sound-damping-material may be introduced into the space between the casing and the silencer inner tube after an end and a connecting piece have been fitted to one side of the silencer. Nor need the silencer inner tube be arranged coaxially with the casing, although this is preferred. The strips of fibrous material can furthermore be cut to the correct length before winding to form a tube. The scope of the invention shall be limited only by the patent claims attached.

**Claims**

1. Silencer (1) for ventilation ducts (7), comprising an outer casing (2), a continuous inner tube (3) of air-permeable, stiff material situated inside the casing, and a sound-damping material (4) in the space between the inner tube and the outer casing, wherein the tube (3) is composed of a woven fabric or non-woven fibrous material **characterized in that** the tube (3) is externally reinforced by means of an adhesive-coated metal wire (6), which is helically wound around the tube and fixed to the outside of the tube.

2. Silencer (1) according to Claim 1, **characterized in that** the walls of the tube (3) have an air-permeability of 5 1/(second x m$^2$ x Pa).

3. Silencer (1) according to Claim 1 or 2, **characterized in that** the tube (3) is constructed from non-woven material having a weight per unit area of 50 - 80 g/m$^2$.

4. Silencer (1) according to Claim 1,2 0r 3, **characterized in that** the tube (3) is constructed from a helically wound strip (3a, 3b) of fibrous material with overlapping edges, the edges overlapping one another and being joined together.

5. Silencer (1) according to Claim 1, 2 or 3, **characterized in that** the tube is constructed from multiple layers of strips, the various layers being joined together.

6. Silencer (1) according to one of Claims 1 to 5, **characterized in that** a connecting piece (5) for coupling the silencer (1) to a pipe (7) of larger diameter than the inner tube (3) of the silencer and forming part of a ventilation duct is arranged at either end of the silencer, each connecting piece comprising an inner cylindrical section (9), which fits the inner tube (3) of the silencer, and an outer nozzle-shaped section (8) of a diameter increasing successively outwards.

7. Method of manufacturing a silencer, wherein one or more strips (16) of woven fabric or non-woven fibrous material are wound around a cylinder (17) and fastened together, following which an hesive-coated metal wire (21) is helically wound on top of the fabric tube formed on the cylinder, following which the strips, now joined together, and the helically wound wire are drawn off the cylinder in the form of a fabric tube, following which said fabric tube together with a superimposed sound-damping material is introduced into an out sheet metal tube, in which an end plate is fixed, following which the silencer is closed by fitting a second end plate.

8. Method according to Claim 7, **characterized in that** the cylinder comprises multiple parts and an arrangement for moving these parts between an outer position, in which the cylinder has a maximum diameter, and an inner position, in which the cylinder has a reduced diameter, the cylinder being held in the outer position during winding of the strips of fibrous material and in the inner position when removing the formed fabric tube from the cylinder.

## Patentansprüche

**1.** Dämpfer (1) für Belüftungskanäle (7), umfassend ein äußeres Gehäuse (2), ein innerhalb des Gehäuses angeordnetes, kontinuierliches Innenrohr (3) aus luftdurchlässigem, steifem Material, und ein schalldämmendes Material (4) in dem Raum zwischen dem Innenrohr und dem äußeren Gehäuse, wobei sich das Rohr (3) aus einem Gewebe oder einem Faservliesmaterial zusammensetzt, **dadurch gekennzeichnet, dass** das Rohr (3) durch einen klebestoffbeschichteten Metalldraht (6) am außen verstärkt ist, welcher um das Rohr herum spiralförmig gewickelt und an der Außenseite des Rohrs befestigt ist.

**2.** Dämpfer (1) nach Anspruch 1, **dadurch gekennzeichnet, dass** die Wände des Rohrs (3) eine Durchlässigkeit von 5 I/(Sekunde x m$^2$ x Pa) aufweisen.

**3.** Dämpfer (1) nach Anspruch 1 oder 2, **dadurch gekennzeichnet, dass** das Rohr (3) aus einem Vliesmaterial mit einem Flächengewicht von 50-80 g/m$^2$ gebildet ist.

**4.** Dämpfer (1) nach Anspruch 1, 2 oder 3, **dadurch gekennzeichnet, dass** das Rohr (3) aus einem spiralförmig gewickelten Streifen (3a, 3b) aus Fasermaterial mit sich überlappenden Rändern gebildet ist, wobei sich die Ränder einander überlappen und miteinander zusammengefügt sind.

**5.** Dämpfer (1) nach Anspruch 1, 2 oder 3, **dadurch gekennzeichnet, dass** das Rohr aus mehreren Schichten von Streifen gebildet ist, wobei die verschiedenen Schichten miteinander zusammengefügt sind.

**6.** Dämpfer (1) nach einem der Ansprüche 1 bis 5, **dadurch gekennzeichnet, dass** ein Verbindungsstück (5) zum Koppeln des Dämpfers (1) an ein Rohr (7) eines größeren Durchmessers als der des Innenrohrs (3) des Dämpfers, welches Verbindungsstück einen Teil eines Belüftungskanals bildet, an jeweils einem Ende des Dämpfers angeordnet ist, wobei jedes Verbindungsstück einen in das Innenrohr (3) des Dämpfers passenden, inneren zylindrischen Abschnitt (9) und einen äußeren düsenförmigen Abschnitt (8) eines sich nach außen sukzessiv vergrößernden Durchmessers umfasst.

**7.** Verfahren zur Herstellung eines Dämpfers, wobei ein oder mehrere Streifen (16) aus Gewebe oder Faservliesmaterial um einen Zylinder (17) herum gewickelt und zusammen befestigt werden, wonach ein klebestoffbeschichteter Metalldraht (21) um den oberen Teil des an dem Zylinder angeformten Geweberohrs herum spiralförmig gewickelt wird, wonach die Streifen, die nunmehr zusammengefügt sind, und der spiralförmig gewickelte Draht vom Zylinder in Form eines Geweberohrs abgezogen werden, wonach das Geweberohr zusammen mit einem überlagerten schalldämmenden Material in ein äußeres Metallblechrohr eingeführt wird, in welchem eine Endplatte befestigt wird, wonach der Dämpfer durch Montage einer zweiten Endplatte geschlossen wird.

**8.** Verfahren nach Anspruch 7, **dadurch gekennzeichnet, dass** der Zylinder mehrere Teile und eine Vorrichtung zum Bewegen dieser Teile zwischen einer äußeren Position, in welcher der Zylinder einen maximalen Durchmesser aufweist, und einer inneren Position, in welcher der Zylinder einen reduzierten Durchmesser aufweist, umfasst, wobei der Zylinder während des Wickelns der Streifen aus Fasermaterial in der äußeren Position und beim Entfernen des angeformten Geweberohrs vom Zylinder in der inneren Position gehalten wird.

## Revendications

**1.** Silenceux (1) pour des conduites de ventilation (7), comprenant un boîtier extérieur (2), un tube intérieur et continu (3) d'un matériau rigide et perméable à l'air situé à l'intérieur du boîtier, et un matériau insonore (4) dans l'espace entre le tube intérieur et le boîtier extérieur, le tube (3) étant composé d'un tissu tissé ou d'un matériau fibreux et non tissé, **caractérisé en ce que** le tube (3) est renforcé à l'extérieur au moyen d'un fil métallique recouvert d'un adhésif (6) qui est enroulé en hélice autour du tube et fixé à l'extérieur du tube.

**2.** Silenceux (1) selon la revendication 1, **caractérisé en ce que** les parois du tube (3) présente un perméabilité à l'air de 5 I/(seconde x m$^2$ x Pa).

**3.** Silenceux (1) selon la revendication 1 ou 2, **caractérisé en ce que** le tube (3) est construit à partir d'un matériau non tissé présentant un poids par unité de surface compris entre 50 et 80 g/m$^2$.

**4.** Silenceux (1) selon la revendication 1, 2 ou 3, **caractérisé en ce que** le tube (3) est construit d'une bande enroulée en hélice (3a, 3b) d'un matériau fibreux avec des bords superposés, les bords étant superposés l'un sur l'autre et étant joints l'un à l'autre.

**5.** Silenceux (1) selon la revendications 1, 2 ou 3, **caractérisé en ce que** le tube est construit de plusieurs couches de bandes, les différentes couches étant jointes l'une à l'autre.

6. Silenceux (1) selon l'une des revendications 1 à 5, **caractérisé en ce qu'**une pièce de raccordement (5) pour l'accouplement du silenceux (1) à un tuyau (7) d'un diamètre supérieur au tube intérieur (3) du silenceux et faisant partie d'une conduite de ventilation est arrangée aux deux bouts du silenceux, chaque pièce de raccordement comprenant une section intérieure cylindrique (9) qui est adaptée au tube intérieur (3) du silenceux, et une section extérieure en forme de buse (8) d'un diamètre croissant successivement vers l'extérieur.

7. Procédé de production d'un silencieux, dans lequel une ou plusieurs bandes (16) d'un tissu tissé ou d'un matériau fibreux et non tissé sont enroulées autour d'un cylindre (17) et fixées l'une à l'autre, ensuite un fil métallique recouvert d'un adhésif (21) est enroulé en hélice sur la partie supérieure du tube de tissu formé sur le cylindre, ensuite les bandes, maintenant jointes l'une avec l'autre, et le fil enroulé en hélice sont retirés du cylindre dans la forme d'un tube de tissu, ensuite ledit tube de tissu avec un matériau insonore superposé est introduit dans un tube extérieur en tôle, dans lequel une plaque d'extrémité est fixée, ensuite le silencieux est fermé par montage d'une deuxième plaque d'extrémité.

8. Procédé selon la revendication 7, **caractérisé en ce que** le cylindre comprend plusieurs parties et un dispositif pour déplacer ces parties entre une position extérieure, dans laquelle le cylindre présente un diamètre maximal, et une position intérieure, dans laquelle le cylindre présente un diamètre réduit, le cylindre étant retenu dans la position extérieure lors de l'enroulement des bandes de matériau fibreux et dans la position intérieure lors de l'enlèvement du tube de tissu formé depuis le cylindre.

**FIG. 1**

**FIG. 2**

FIG. 3

FIG. 4

EP 1 998 119 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6253873 B1